Europäisches Patentamt

European Patent Office

Office européen des brevets

(11) Veröffentlichungsnummer: **0 307 621 B1**

## (12) EUROPÄISCHE PATENTSCHRIFT

(45) Veröffentlichungstag der Patentschrift: **07.04.93**

(21) Anmeldenummer: **88113026.4**

(22) Anmeldetag: **11.08.88**

(51) Int. Cl.$^5$: **F23N 1/02**, C01B 5/00

(54) **Verfahren zur druckgesteuerten katalytischen Verbrennung von Gasen in einem Oxidationsreaktor.**

(30) Priorität: **01.09.87 DE 3729113**

(43) Veröffentlichungstag der Anmeldung:
**22.03.89 Patentblatt 89/12**

(45) Bekanntmachung des Hinweises auf die
Patenterteilung:
**07.04.93 Patentblatt 93/14**

(84) Benannte Vertragsstaaten:
**AT BE CH DE FR GB IT LI NL SE**

(56) Entgegenhaltungen:
**DE-A- 3 143 050**
**US-A- 4 302 419**

(73) Patentinhaber: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Ledjeff, Konstantin, Dr.**
**Ulmenweg 6**
**W-7812 Bad Krozingen(DE)**

(74) Vertreter: **Rackette, Karl, Dipl.-Phys. Dr.-Ing**
**Kaiser-Joseph-Strasse 179 Postfach 1310**
**W-7800 Freiburg (DE)**

EP 0 307 621 B1

**Beschreibung**

Die Erfindung betrifft ein Verfahren zur druckgesteuerten katalytischen Verbrennung von brennbaren Gasen mit im wesentlichen zwei Reaktionspartnern, bei denen es sich um ein Oxidationsmittel und um ein brennbares Gas handelt, in einem Oxidationsreaktor mit

a) einem Füllschritt, in dem der Oxidationsreaktor mit einem vorbestimmten Gemisch des ersten und des zweiten Reaktionspartners bis zu einem vorbestimmten Anfangsdruck $P_0$ gefüllt wird,

b) einem ersten Zuführschritt, in dem der erste Reaktionspartner während einer solchen Zeitdauer $\Delta t2$ in den Oxidationsreaktor geleitet wird, bis daß im Reaktor der Anfangsdruck $P_0$ oder ein Ausgangsdruck $P_1$ auf einen vorgegebenen Überdruck $P_2$ angestiegen ist, und

c) einem zweiten Zuführschritt, in dem nur der zweite Reaktionspartner in den Oxidationsreaktor geleitet wird.

Bei einem derartigen, aus der DE-OS 31 43 050 bekannten Verfahren zur druckgesteuerten Wasserstoff/Sauerstoff-Rekombination in einem Rekombinations- bzw. Oxidationsreaktor findet eine katalytische flammlose Verbrennung von Wasserstoff in Sauerstoff statt. Im Reaktor reagieren unter der katalytischen Wirkung eines Katalysators die Reaktionspartner Wasserstoff und Sauerstoff unter Bildung von Wasser in einer gesteuerten flammlosen Reaktion. Um einen möglichst hohen Wirkungsgrad der Oxydation zu erreichen, ist es anstrebenswert die Gasversorgung im Oxidationsreaktor möglichst nahe dem stöchiometrischen Verhältnis von Brenngas zu Sauerstoff zu bringen. Im Falle der Verbrennung von Wasserstoff in Sauerstoff wäre das ein Volumenverhältnis von 2 : 1. In der Praxis ist es allerdings sehr schwierig, exakt das stöchiometrische Verhältnis einzustellen, da alle Druck- und Volumenregler mit Fehlern behaftet sind und es dadurch zu Verschiebungen der Gasverhältnisse kommen kann.

Gemäß dem Verfahren der DE-OS 31 43 050 wird vorgeschlagen, dem anfänglich mit nur einem der Gase gefüllten Reaktor fortlaufend von außen zuerst das andere zweite Gas zuzuführen, bis Überstöchiometrie erreicht ist. Anschließend erfolgt Rekombination bis auf den überstöchiometrischen Gasrest. Danach wird wieder das erste Gas zugeführt, bis wiederum Überstöchiometrie erreicht ist und erneut Rekombination bis auf den überstöchiometrischen Rest erfolgt. Diese abwechselnde Beschickung des Reaktors mit den Reaktionsgasen erfolgt über Ventile, die vom Innendruck des Reaktors gesteuert werden.

Nachteilig an diesem Verfahren ist, daß während des Betriebs der Reaktordruck und auch die Umsatzleistung ständig stark schwanken. Dies führt zu einer raschen Materialermüdung und beeinflußt die Lebensdauer des Reaktors.

Weiterhin nachteilig ist, daß durch die wechselnde Überstöchiometrie des einen bzw. des anderen Partners Gasmischungen verschiedenen Charakters im Reaktorraum existieren. Wird eine Verbrennungsreaktion, d.h. deren Kinetik, und daraus resultierend die Reaktionsgeschwindigkeit stark von den Eigenschaften eines Reaktionspartners beeinflußt, können in den verschiedenen Reaktorgaszuständen, d.h. zum einen dieser Partner stark im Überschuß, zum anderen im Unterschuß, erhebliche Unterschiede in der Reaktionsgeschwindigkeit auftreten. Die erzeugte Wärmemenge zwischen den einzelnen Beschikkungszuständen schwankt stark. Außerdem können Hysterese-Erscheinungen in den Umsteuerbereichen auftreten, die eine definierte Steuerung erschweren.

Ausgehend von diesem Stand der Technik ist es Aufgabe der vorliegenden Erfindung, eine während der Betriebsdauer gleichmäßige, d.h. mit geringen Druckschwankungen, Versorgung eines Oxidationsreaktors mit Brenngas und Sauerstoff nahe des stöchiometrischen Verhältnisses zu gewährleisten.

Erfindungsgemäß wird die Aufgabe dadurch gelöst, daß während des Zuführens des ersten Reaktionspartners während des ersten Zuführschrittes b) der zweite Reaktionspartner weiter in den Oxidationsreaktor geleitet wird, wobei der erste Reaktionspartner im Verhältnis zum zweiten Reaktionspartner im stöchiometrischen Überschuß zugeführt wird, daß der zweite Zuführschritt eine Zeitdauer $\Delta t1$ dauert, bis daß der Druck im Oxidationsreaktor auf den Ausgangsdruck $P_1$ gefallen ist, und daß die Zuführschritte abwechselnd direkt aufeinanderfolgend durchgeführt werden.

Bei der erfindungsgemäßen Steuerung wird laufend nur einer der Partner im überstöchiometrischen Verhältnis zugeführt. Die stöchiometrischen Mengen der beiden Reaktionspartner reagieren im Reaktor ab, die überschüssige Menge des einen Reaktionspartners, die nicht abreagiert, führt zu einem allmählichen linearen Druckanstieg im Reaktor. Nach Erreichen eines bestimmten Überdruckwertes $P_2$ wird die Zufuhr des im Überschuß zugeführten Partners für eine Zeitspanne gesperrt, d.h. es wird nur noch der andere, im Unterschuß zugeführte Partner zugeführt. Dieser reagiert jetzt mit der überschüssigen Menge des anderen Partners, wodurch ein Druckabfall im Reaktor erfolgt. Nach Erreichen eines unteren Druckwertes $P_1$ wird der gesperrte, im Überschuß zugeführte Partner wieder zugeführt, bis der Druck $P_2$ erreicht ist und dann wird erneut die Zufuhr des überschüssigen Partners unterbrochen.

Dieses äußerst einfache Steuerungsverfahren benötigt somit lediglich ein Sperren bzw. Öffnen der Zufuhr des im Überschuß zugeführten Partners bei gleichzeitiger Drucküberwachung im Reaktor zwischen den vorgegebenen Druckwerten $P_1$ und $P_2$. Durch entsprechend empfindliche Druckmeßgeräte kann eine äußerst geringe Druckdifferenz zwischen den Ansprechdrücken $P_1$ und $P_2$ gewählt werden, die dann zu einer sehr ebenen, nur leicht gewellten Druckverlaufskurve im Oxidationsreaktor während der Reaktionszeit führen. Wird beispielsweise chemisch reiner Wasserstoff und chemisch reiner Sauerstoff in einem derartigen Oxidationsreaktor katalytisch verbrannt, wobei diese Ausgangsgase beispielsweise durch Elektrolyse von Wasser erhältlich sind, entsteht als einziges Reaktionsprodukt Wasser. Wird ein derartiger Reaktor unterhalb einer Temperatur von 100°C gefahren, kann das Reaktionswasser auskondensiert und über geeignete Maßnahmen aus dem Reaktor entfernt werden, so daß eine einfache und sichere Steuerung derartiger Reaktoren möglich ist, die deren Einsatz somit beispielsweise auch in Haushalten zur Wärmeerzeugung ermöglichen.

Besonders vorteilhaft ist ein Verfahren dadurch, daß es unter der Bedingung $P_1 = P_0$ durchgeführt wird. Dadurch ist gewährleistet, daß während der gesamten Betriebsdauer ein gewisser Überschuß eines Reaktionspartners im Oxidationsreaktor vorhanden ist, d.h. es ist eine Gasmischung vorhanden, die zu jedem Zeitpunkt zwar mit schwankendem Gehalt, aber nur ein und denselben Partner im überstöchiometrischen Verhältnis aufweist. Beeinflußt einer der beiden Reaktionspartner die Kinetik der Rekombinationsreaktion positiv, so kann dieser dann immer im Unterschuß zugeführt werden, was auf Dauer gesehen, zu einer Leistungserhöhung führt. Im umgekehrten Fall, d.h. wenn ein Reaktionspartner die Rekombinationsreaktion in negativem Sinne beeinflußt, so kann dann dieser gezielt im Überschuß eingesetzt werden, wodurch, auf Dauer gesehen, dessen negativer Einfluß minimiert wird. Besonders günstig und nahe am stöchiometrischen Verhältnis wird dadurch gearbeitet, daß der Überschuß des einen Reaktionspartners nur bis etwa 5 % beträgt.

Zweckmäßigerweise wird beispielsweise eine Knallgasmischung mit Sauerstoffüberschuß im Wasserstoff zu Sauerstoffverhältnis wie 65 : 35 zugeführt. Eine derartige, nahezu am stöchiometrischen Verhältnis von 66,6 : 33,3 (2:1) befindliche Knallgasmischung ermöglicht einen hohen Wirkungsgrad der Oxidationsreaktion.

Besonders vorteilhaft wird die Zeitspanne $\Delta t_1$ während der die Zufuhr des im Überschuß zugeführten Partners gesperrt ist, so gewählt, daß die nachgeführte Menge des unterschüssigen Partners zumindest ausreichend ist, um die im Reaktor angesammelte Menge des überschüssigen Partners umzusetzen.

Dadurch wird am Ende der Zeitspanne $\Delta t_1$ das exakt stöchiometrische Verhältnis erreicht und mit optimaler Wärmeausbeute gefahren. Ist dann die Überschußmenge nur sehr gering, steigt der Druck nur sehr langsam im Reaktor auf die Steuergröße $P_2$ an, und bei kleiner Differenz zwischen $P_1$ und $P_2$ wird ein Arbeiten nahezu in der Nähe der idealen stöchiometrischen Drucklinie erreicht.

Eine besonders günstige -sprich hohe- Änderung des Drucks im Nahbereich des unteren Druckwertes $P_1$ ist dadurch erreicht, daß nach Erreichen des Druckwertes $P_2$ der unterschüssige Partner nach einer Zeitspanne $\Delta t_c < \Delta t_1$ in geringerem oder geringer werdendem Maße während einer Zeitspanne $\Delta t_d < \Delta t_1$ mit $\Delta t_1 = \Delta t_c + \Delta t_d$ zugeführt wird. Durch diese Steuerung wird zunächst nach Abschalten des im Überschuß zugeführten Reaktionspartners der im Unterschuß zugeführte Partner weiterhin gleichmäßig zugeführt, wobei durch die Überlagerung der Steigerung des Drucks durch Zufuhr eines Gases und Abreagieren der Gaspartner zunächst keine sehr starke Druckänderung in der Zeitspanne $\Delta t_c$ stattfindet. Durch Zuführen des unterschüssigen Partners während eines Zeitraums $\Delta t_d$ in geringerem oder geringer werdendem Maße findet im Gegensatz zu der Zeitspanne $\Delta t_c$ eine stärkere Druckänderung pro Zeiteinheit statt, so daß ein sicheres Ansprechen des Meßgerätes für den unteren Druckwert $P_1$ ermöglicht ist.

Dies wird besonders vorteilhaft dadurch erreicht, daß nach Erreichen des Druckwertes $P_2$ die Zufuhr des unterschüssigen Partners nach einer Zeitspanne $\Delta t_a < \Delta t_1$ während einer Zeitspanne $\Delta t_b < \Delta t_1$ mit $\Delta t_1 = \Delta t_a + \Delta t_b$ gesperrt ist. Das bedeutet, während der Zeitspanne $\Delta t_a$ wird beispielsweise diejenige Menge des unterschüssigen Partners zugeführt, die äquivalent zur überschüssigen Menge des anderen Partners ist. Durch Absperren beider Gaszufuhren während des Zeitraumes $\Delta t_b$ findet durch Abreagieren der beiden Partner ein relativ rascher Druckabfall statt, der wiederum ein günstiges und sicheres Ansprechen des Meßgerätes des unteren Druckpunkts $P_1$ ermöglicht. Dieses Verfahren schafft einerseits, über den gesamten Reaktionsverlauf gesehen eine gleichmäßige Druckkurve, die jedoch in den Meßpunkten $P_1$ eine genügend starke Änderung pro Zeiteinheit aufweist und daher ein Erfassen mit gängigen Druckmeßgeräten, die auf Druckschwankungen reagieren, ermöglicht ist.

Besonders vorteilhaft, insbesondere bei solchen Reaktionspartnern, die zu Restgasen im Reaktorraum führen, ist, daß nach einer gewissen vorgegebenen Anzahl von Steuerzyklen der Reaktorraum für eine Zeitspanne $\Delta t_x$ bis zum Erreichen

des Drucks $P_1$ geöffnet wird. Verwendet man beispielsweise bei der Verbrennung von Wasserstoff in Sauerstoff nicht chemisch reine Gase, sondern solche in handelsüblicher Qualität, wie sie beispielsweise in Stahlflaschen erhältlich sind (Drei-Ring-Qualität, 99,9 % oder Vier-Ring-Qualität 99,99 %), so sammeln sich im Lauf der Reaktionszeit gewisse Restgase bzw. Inertgas(meist Stickstoff) im Reaktor an, die zu einem allmählichen Druckanstieg im Reaktor führen. Dadurch kann nicht ausgeschlossen werden, daß während des Zeitraumes $\Delta t_1$ der untere Druckwert $P_1$ nicht erreicht wird, so daß das Zusteuern des abgeschalteten Partners nicht mehr erfolgen und ein weiteres Zuströmen des anderen Partners einen fortlaufenden Druckanstieg im Reaktor verursachen würde, ohne daß der Punkt $P_1$ erreicht werden könnte. Durch das zyklische Öffnen des Reaktorraumes ist sichergestellt, daß der untere Druckpunkt $P_1$ erreicht wird und gleichzeitig unerwünschte Restgase aus dem Reaktor entfernt werden.

Besonders zweckmäßig wird in diesem Fall nach Ablauf der Zeitspanne $\Delta t_1$ falls der Druckwert $P_1$ noch nicht erreicht ist, der Reaktor für eine Zeitspanne $\Delta t_x$ bis zum Erreichen des Drucks $P_1$ geöffnet. Diese Verfahrensweise, d.h. die Überprüfung nach jeder Zeitspanne $\Delta t_1$ auf Erreichen des Druckwertes $P_1$, ist dann zweckmäßig, wenn Reaktionspartner mit relativ hohem Inertgasanteil eingesetzt werden.

Besonders vorteilhaft wird der Reaktor im Zeitintervall $\Delta t_b$ geöffnet. In diesem Zeitintervall ist die Zufuhr beider Reaktionspartner gesperrt, so daß ein Öffnen des Reaktors rasch und ohne erheblichen Verlust an Ausgangsprodukten auf den Druck $P_1$ abgesenkt werden kann.

Eine besonders sichere Steuerung ist dadurch erreicht, daß nach Erreichen des Drucks $P_2$ eine mit dem beispielsweise zur Atmosphäre öffnenden Ablaßventil gekoppelte Zeituhr startet, die nach einem Zeitintervall $\Delta t_b > \Delta t_a$ das Ablaßventil bis zum Absinken des Reaktordrucks auf $P_1$ öffnet, falls nach der Zeitspanne $\Delta t_b$ der Druck $P_1$ nicht erreicht sein sollte. Dies bedeutet, daß zunächst im Zeitraum $\Delta t_a$ die Nachführung des im Unterschuß eingesetzten Partners erfolgt, so daß zumindest stöchiometrische Gasmengen zur Abreaktion im Reaktor vorhanden sind, die dann auch alsbald reagieren. Wird durch dieses Abreagieren der untere Druckpunkt $P_1$ noch nicht erreicht, so wird nach Ablauf der Zeitspanne $\Delta t_b$ für diesen Fall der Reaktor geöffnet, bis der Druck $P_1$ erreicht ist. War der Druck $P_1$ zum Ende der Zeitspanne $\Delta t_b$ schon erreicht, erfolgt keine Öffnung des Reaktorraumes.

Zweckmäßigerweise wird eine zeit/druckgesteuerte Mimik zur Steuerung der Verfahrensschritte eingesetzt. Diese ermöglicht, über gebräuchliche Zeit- bzw. Druckmeßvorrichtungen das Verfahren durchzuführen.

Vorteilhafterweise kann auch eine druck/mengenproportionale gesteuerte Mimik zur Steuerung des Verfahrens eingesetzt werden, wobei die Mengenmeßgröße die eingesetzte Gasmenge und/oder die Reaktionsproduktmenge und/oder die erzeugte Wärmemenge ist.

Eine besonders günstige Abführung der aus dem Reaktor zu entfernenden Substanzen wird dadurch erreicht, daß die zeitweilige Öffnung des Reaktors beispielsweise zur Atmosphäre, in einen gesonderten Behälter od. dgl. hin erfolgt, der je nach Zusammensetzung der Reaktionsgasmischung entsprechend den Abgasvorschriften od. dgl. abgelassen oder entsorgt werden kann. Dabei können auch aus den Abgasmengen noch die unverbrauchten Ausgangsgase abgetrennt und erneut dem Reaktor zugeführt werden.

Zweckmäßigerweise erfolgt die Entsorgung derart, daß im Reaktor anfallende flüssige Reaktionsprodukte gleichzeitig mit den gasförmigen Produkten aus dem Reaktor entnommen werden.

Die Erfindung wird anhand einiger ausgewählter Ausführungsbeispiele im Zusammenhang mit den beiliegenden Zeichnungen näher erläutert. Es zeigen:

Figur 1     in einem P/t- bzw. V/t-Diagramm die Steuerung des erfindungsgemäßen Verfahrens gemäß einem ersten Ausführungsbeispiel,

Figur 2     ein P/t- bzw. V/t-Diagramm eines zweiten Ausführungsbeispiels, und

Figur 3     eine Steuervorrichtung zur Durchführung eines Fig. 2 entsprechenden erfindungsgemäßen Verfahrens.

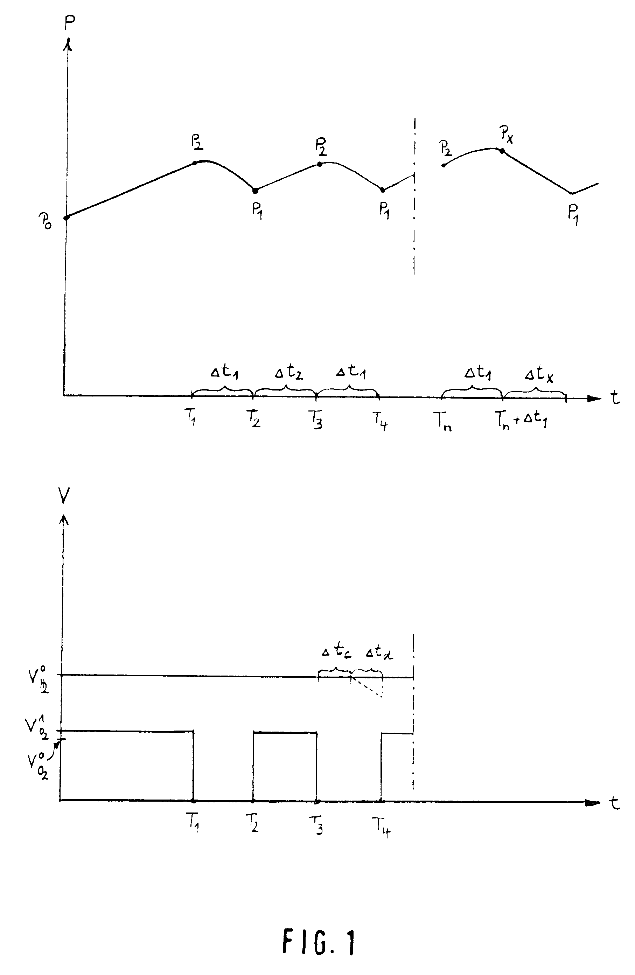

Bei einem in Fig. 1 gezeigten ersten Ausführungsbeispiel eines erfindungsgemäßen Verfahrens wird einem Oxidationsreaktor gasförmiger Wasserstoff und Sauerstoff zugeführt, die im Oxidationsreaktor an einem Oberflächenkatalysator, beispielsweise Palladium, zu Wasser reagieren. Durch die Wirkung des Katalysators findet die Verbrennung von Wasserstoff mit Sauerstoff flammlos statt. Die dabei erzeugte Energie (etwa 70 kgcal/Mol gebildeten Wassers) kann zur Heizung, Stromerzeugung od. dgl. verwendet werden. Das stöchiometrische Verhältnis der Gase Wasserstoff zu Sauerstoff beträgt 2 : 1, d.h. 2 Mol Wasserstoffgas und 1 Mol Sauerstoffgas reagieren zu 2 Mol Wasser. Die stöchiometrische Menge an Wasserstoff ist $V^o_{H2}$, die an Sauerstoff $V^o_{O2}$. Sie sorgen im Reaktor für einen Ausgangsdruck $P_0$ (siehe P/t-Diagramm). Der Absolutwert von $P_0$ richtet sich danach, ob der Oxidationsreaktor mit Atmosphären- oder Überdruck gefahren wird. Im in Fig. 1 gezeigten Ausführungsbeispiel beträgt der Überdruck etwa 1 bar.

Gemäß dem erfindungsgemäßen Verfahren wird eine Komponente, hier Sauerstoff, in einem Überschuß dem Oxidationsreaktor zugeführt, d.h. die Menge $V_{O2}^1 > V_{O2}^0$. Der Überschuß an Sauerstoff beträgt etwa 1,7 %, d.h. das Verhältnis zwischen Sauerstoff und Wasserstoff beträgt etwa 35 : 65. Dieser Unterschied ist im V/t-Diagramm von Fig. 1 der Deutlichkeit halber überhöht dargestellt.

Diese zum Zeitpunkt t = 0 zugeführten Gasmengen an Wasserstoff und Sauerstoff führen zum Ausgangsdruck $P_0$, der bis zu einem Zeitpunkt $T_1$ auf einen Druckwert $P_2 > P_0$ angestiegen ist. Dieser Anstieg wird durch die überschüssige Sauerstoffmenge verursacht, die keinen Wasserstoffreaktionspartner zur Verfügung hat und deshalb nicht zu Wasser abreagieren kann. Im Zeitpunkt $T_1$ wird die Zufuhr von Sauerstoff gesperrt und lediglich Wasserstoff wird dem Reaktor weiter zugeführt (s. V/t-Diagramm). Dieses weitere Zuführen an Wasserstoff führt zunächst noch zu einem geringen Druckanstieg, der aber alsbald durch Abreagieren des zugeführten Wasserstoffs mit der Überschußmenge an Sauerstoff zu einer Druckverminderung führt. Der Druckabfall schreitet während eines Zeitintervalls $\Delta t_1$ in etwa linear fort und erreicht zu einem Zeitpunkt $T_2$ einen Druck P, mit $P_0 < P_1 < P_2$ ist. Bei Erreichen des Druckwertes $P_1$ wird die Zufuhr von Sauerstoff wieder geöffnet und diese führt, da sie dann wiederum überschüssig erfolgt, zu einem erneuten linearen Druckanstieg im Intervall $\Delta t_2$, bis zu einem Zeitpunkt $T_3$ erneut der Druck $P_2$ im Reaktor erreicht ist und dann wiederum die Zufuhr von Sauerstoff gestoppt wird. Dieser Vorgang wiederholt sich dann immer wieder.

Gemäß einer Variante des zuvor beschriebenen Verfahrens wird nach dem Zeitpunkt $T_3$ zunächst während eines Zeitraumes $\Delta t_c$ (s. V/t-Diagramm) weiter Wasserstoff zugeführt, und nach Ablauf der Zeitspanne $\Delta t_c$ während eines Zeitraums $\Delta t_d$ bis zum Zeitpunkt $T_4$ eine abnehmende Menge an Wasserstoff zugeführt. Diese Variante (gestrichelte Linie im V/t-Diagramm) mit sich verringernder Zufuhrmenge an Wasserstoff wird dann eingesetzt, wenn im Reaktor mit sehr geringen Unterschieden zwischen $P_1$ und $P_2$ gefahren wird, d.h. wenn die Kurve im P/t-Diagramm nur mit einer sanften Wellung verläuft. Durch die Abnahme der Wasserstoffzufuhr im Bereich $\Delta t_d$ findet unmittelbar vor Erreichen des Zeitpunktes $T_4$ ein relativ starker Druckabfall statt, so daß die zur Steuerung verwandten Druckmeßgeräte, die auf einen Druckabfall pro Zeiteinheit reagieren, sicher an $P_1$ ansprechen.

In einer weiteren Variante wird nach der Zeitspanne $\Delta t_c$ Wasserstoff in geringerem aber konstantem Maße während der Zeitspanne $\Delta t_d$ zugeführt.

Entsprechen die während der Sperrung der Sauerstoffzufuhr zugeführten Wasserstoffmengen exakt denjenigen an überschüssigem Sauerstoff, so reagiert die gesamte Überschußmenge unter Bildung von Wasser ab, d.h. die Druckpunkte $P_1$ befinden sich jeweils im P/t-Diagramm auf dem Niveau von $P_0$. Je nach Empfindlichkeit der zur Verfügung stehenden Meßgeräte kann der Unterschied zwischen $P_1$ bzw. $P_2$ sehr gering gehalten werden.

Der Reaktor im in Fig. 1 gezeigten Beispiel wird so gefahren, daß die Punkte $P_1$ allesamt auf einem höheren Niveau liegen (im P/t-Diagramm) als $P_0$, d.h. es herrscht im Reaktor immer ein Sauerstoffüberschuß. Diese Variante kann insbesondere dann eingesetzt werden, wenn der überschüssige Partner die Reaktion positiv beeinflußt, so daß einerseits durch Arbeiten in der Nähe des nahezu stöchiometrischen Verhältnisses und gleichzeitig mit dauerndem Überschuß der die Reaktionskinetik positiv beeinflussenden Komponente, eine optimale Energieausbeute erreicht wird.

Die Steuerung kann selbstverständlich auch so eingestellt werden, daß die Drucksteuerpunkte $P_1$ etwas unterhalb des Niveaus von $P_0$ (im P/t-Diagramm) liegen.

Werden, wie in den zuvor genannten Beispielen, chemisch reiner Wasserstoff und chemisch reiner Sauerstoff eingesetzt, so entsteht als Reaktionsprodukt lediglich Wasser, das bei Fahren des Oxidationsreaktors unter 100°C in diesem auskondensiert und dann gegebenenfalls abgezogen werden kann. Dies wird beispielsweise der Fall sein, wenn Wasserstoff bzw. Sauerstoff eingesetzt werden, die durch vorherige Elektrolyse von Wasser erzeugt wurden.

Wird Sauerstoff und Wasserstoff handelsüblichen Druckgasflaschen entnommen, so ist dabei immer ein gewisser Teil eines Inertgases, meist Stickstoff oder Edelgase vorhanden. So sind handelsübliche Qualitäten beispielsweise Drei-Ring-Qualitäten, das bedeutet einen Reinheitsgrad von 99,9 %, bzw. Vier-Ring-Qualitäten, d.h. 99,99 %. Derartige, wenn auch nur sehr geringe Inertgasmengen, können nun dazu führen, daß nach einer großen Anzahl von Steuerzyklen in einem Oxidationsreaktor sich so viel Inertgasmenge angesammelt hat, daß beispielsweise in einem Steuerzeitpunkt $T_n$ (s. P/t-Diagramm) nach einer Zeitspanne $\Delta t_1$ ein Druck $P_x$ eingestellt ist, der höher $P_1$ liegt. Das heißt, in diesem Fall wird der untere Schaltpunkt $P_1$ nicht erreicht, somit wird die Zufuhr von Sauerstoff nicht mehr geöffnet, sondern lediglich weiterhin Wasserstoff zugeführt. Das würde dazu führen, daß in kürzester Zeit der Reaktor mit einem Überschuß an Wasserstoff versehen ist, der, da ihm sein Reaktionspartner Sauerstoff fehlt, nicht mehr abreagieren kann und lediglich zu einem Druckanstieg bei gleichzeitigem Leistungsabfall des Reaktors führen würde.

Um diese Situation nicht eintreten zu lassen, wird, falls zu einem Zeitpunkt $T_n + \Delta t_1$ der untere

Steuerdruckwert $P_1$ nicht erreicht ist, der Reaktor für eine Zeitspanne $\Delta t_x$ geöffnet, wodurch ein rascher Druckabfall auf $P_1$ erfolgt und der Steuermechanismus wieder wie gewohnt ablaufen kann. Beim Öffnen des Reaktors treten neben den angesammelten Inertgasen auch Wasserstoff und Sauerstoff aus, die entweder in die Atmosphäre abgelassen oder in geeigneten Behältnissen aufgefangen werden und gegebenenfalls von den Inertgasen getrennt dem Oxidationsreaktor wieder zugeführt werden können.

In einem weiteren Ausführungsbeispiel ist in diesem Fall vorgesehen, daß der Druck auch unter den Wert von $P_1$ absinken kann, d.h. daß der Oxidationsreaktor "teilweise entleert" wird, um einen hohen Anteil der Inertgase abzuführen. Nach Erreichen des gegebenenfalls tiefer liegenden Druckschaltpunktes $P_1$ werden dann wieder beide Gaszuführungen geöffnet, so daß wiederum die Ausgangsbedingungen im Reaktor vorhanden sind, allerdings ausgehend von einem niedrigeren absoluten Niveau als $P_0$, d.h. es ist dann einfach eine längere Zeitspanne notwendig, bis der obere Druck $P_2$ wieder erreicht wird.

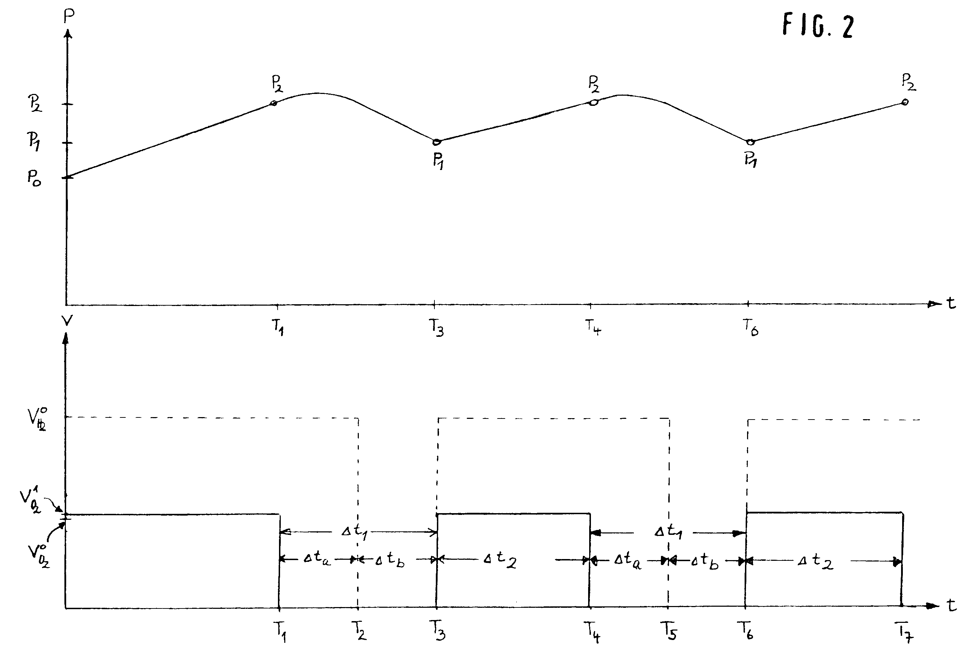

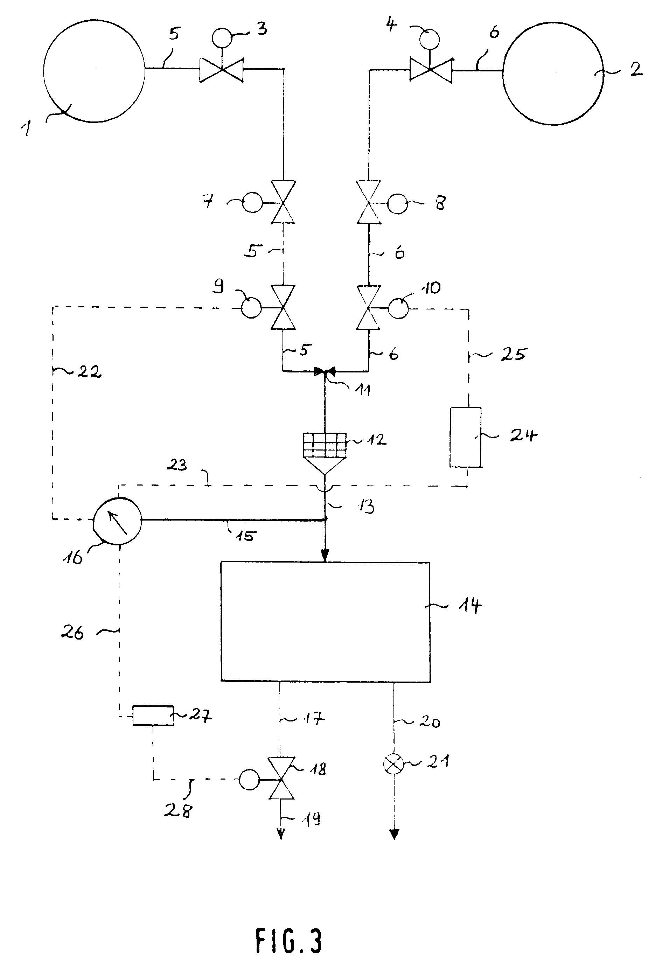

Bei einem in Fig. 2 und 3 gezeigten Verfahren bzw. der schematisch dargestellten Gasversorgungsanlage wird Sauerstoff einem Vorratsbehälter 1 und das mit diesem brennbare Gas, im gezeigten Ausführungsbeispiel Wasserstoff, einem Vorratsbehälter 2 entnommen. Die Gase werden über ein Leitungssystem 5 bzw. 6 je einer Druckregelvorrichtung 3 bzw. 4 zugeführt, die dafür sorgt, daß auch bei Änderungen des Vordruckes in den Vorratsbehältern 1 bzw. 2 der Nachdruck konstant bleibt.

Nach Durchströmen der Druckregelvorrichtungen 3 und 4 durchlaufen die Gase Durchflußregler 7 bzw. 8, die eine hohe Genauigkeit aufweisen und den eingestellten Durchfluß auch bei schwankendem Nachdruck aufrechterhalten.

Nach Durchströmen der Durchflußregler 7 und 8 treffen die Gase auf Absperrventile 9 bzw. 10.

Die Leitungssysteme 5 (für Sauerstoff) und 6 (für Wasserstoff) werden in einem Punkt 11 zusammengeführt, und die gemischten Gase durchströmen eine Flammsperre 12. Hinter der Flammsperre 12 werden die Gase über eine Leitung 13 einem Oxidationsreaktor 14 zugeführt.

Hinter der Flammsperre 12 ist in der Leitung 13 eine Abzweigung 15 vorgesehen, die mit einem Druckmeßgerät 16 in Verbindung steht.

Aus dem Oxidationsreaktor 14 führt eine Leitung 17 zu einem Absperrventil 18, das mit einer Abgasleitung 19 versehen ist, über die Gase aus dem Oxidationsreaktor 14 in die Atmosphäre oder in einen gesonderten Behälter austreten können.

Der Oxidationsreaktor 14 ist außerdem mit einer Abflußleitung 20 versehen, aus der über einen Hahn 21 flüssige Reaktionsprodukte aus dem Oxidationsreaktor 14 abgelassen werden können.

Das Druckmeßgerät 16 ist über eine Steuerleitung 22 mit dem Absperrventil 9 des Sauerstoffleitungssystems 5 verbunden.

Weiterhin ist das Druckmeßgerät 16 über eine weitere Steuerleitung 23 mit einem Zeitrelais 24 verbunden, das wiederum über eine Steuerleitung 25 mit dem Absperrventil 10 des Wasserstoffleitungssystems 6 verbunden ist.

Das Druckmeßgerät 16 ist ferner über eine Steuerleitung 26 mit einem Regler 27 verbunden, der wiederum über eine Steuerleitung 28 mit dem Absperrventil 18 der Abgasleitung 19 des Oxidationsreaktors 14 verbunden ist.

Zur Durchführung des Verfahrens werden die Drücke an den Druckreglern 3 bzw. 4 so eingestellt, daß sie höher sind als der maximale obere Schaltpunkt des Druckmeßgerätes 16. Die Druckregler 3 bzw. 4 können einstufig bzw. zur Feinregulierung auch zweistufig ausgebildet sein.

Die Durchflüsse an den Durchflußreglern 7 bzw. 8 werden so eingestellt, daß der Durchfluß nahezu stöchiometrisch ist. Der Durchfluß am Regler 7 des Sauerstoffleitungssystems 5 wird jedoch geringfügig höher eingestellt, und zwar um so viel, daß bei allen Regelungenauigkeiten stets ein Überschuß von Sauerstoff vorhanden ist. Dabei wird eine Erhöhung um etwa 1 bis 2% eingestellt. Beim Betrieb mit der Knallgasmischung beträgt somit das Verhältnis von Sauerstoff zu Wasserstoff 35 : 65.

Die Reaktionspartner Sauerstoff und Wasserstoff werden nach Durchströmen der offenen Absperrventile 9 und 10 an der Stelle 11 gemischt, durchströmen die Flammsperre 12 und gelangen über die Leitung 13 in den Oxidationsreaktor 14. Die Flammsperre 12 dient dazu, eine flammende Verbrennung oder Zündung des an sich zündfähigen Knallgasgemisches zu verhindern.

Im Oxidationsreaktor 14 reagieren Wasserstoff und Sauerstoff an einem hier nicht gezeigten Oberflächenkatalysator, wie beispielsweise feinstverteiltem Platin, flammlos zu Wasser.

Durch den Überschuß an Sauerstoff ($V_{O2}^1 > V_{O2}^0$, siehe V/t-Diagramm) steigt der Druck im Oxidationsreaktor 14 linear an und erreicht zu einem Zeitpunkt $T_1$ einen Druck $P_2$. Das Druckmeßgerät 16 registriert über die Leitung 15 das Erreichen des oberen Schaltpunktes $P_2$ und veranlaßt über die Steuerleitung 22 die Schließung des Absperrventils 9 und somit die Sauerstoffzufuhr. Gleichzeitig wird über die Steuerleitung 23 des Druckmeßgerätes das Zeitrelais 24 gestartet, das nach einer definierten Zeit $\Delta t_a$ über die Steuerleitung 25 das Absperrventil 10 schließt, somit auch die Wasserstoffzufuhr stoppt. Das Zeitintervall $\Delta t_a$ ist so bemessen, daß die nachfließende Wasserstoffmenge zumindest ausreicht, um das im Oxidationsreaktor 14 gesammelte Sauerstoffgas in Wasser umzusetzen. Während einer Zeitspanne $\Delta t_b$ ist sowohl die Wasserstoff- als auch die Sauerstoffzufuhr zum Oxidationsreaktor gesperrt, was zu einem Druckabfall bis auf den unteren Schaltpunkt $P_1$ zum Zeitpunkt $T_3$ resultiert. Zum Zeitpunkt $T_3$ wird sowohl das Absperrventil 9 der Sauerstoffleitung als auch das Absperrventil 10 der Wasserstoffleitung wieder geöffnet, und beide Gase strömen wieder in den Oxidationsreaktor 14 ein. Dies führt wiederum zu einem Druckanstieg im Oxidationsreaktor 14, der zu einem Zeitpunkt $T_4$ wiederum den oberen Schaltwert $P_2$ erreicht hat. Während eines Zeitintervalls $\Delta t_2$ strömen dann also wieder beide Gase in den Oxidationsreaktor. Nach Erreichen des oberen Schaltpunktes $P_2$ zum Zeitpunkt $T_4$ setzt wiederum der zuvor beschriebene Steuermechanismus ein, d.h. zunächst ein Schließen der Sauerstoffzufuhr über das Absperrventil 9 und nach Ablauf einer Zeitspanne $\Delta t_a$ auch ein Schließen der Wasserstoffzufuhr am Absperrventil 10. Diese Regelvorgänge wiederholen sich immer wieder.

Füllt sich bei längerem Betrieb der Oxidationsreaktor 14 mit Reaktionsprodukt, beispielsweise dampfförmigem Wasser bei Betrieb über 100°C und/oder mit einem Inertgas, beispielsweise nicht reaktionsfähigen Verunreinigungen, dann verringert sich das den zuströmenden Gasen zur Verfügung stehende Volumen im Oxidationsreaktor. Dadurch kommt es zu Veränderungen der Gaszusammensetzung im Reaktor, und die zur Steuerung notwendigen Druckveränderungen können sich stark verlangsamen. Bleibt der Druck im Oxidationsreaktor 14 für längere Zeit im Bereich des oberen Schaltpunktes $P_2$, kann es möglich sein, daß der untere Schaltpunkt $P_1$ nicht mehr erreicht wird.

Um dies zu vermeiden, ist ein Regler 27 vorgesehen, in dem über die Steuerleitung 26, die mit dem Druckmeßgerät 16 verbunden ist, eine Zeituhr gestartet wird, wenn das Druckmeßgerät 16 den oberen Druckmeßpunkt $P_2$ registriert. Nach dem Zeitintervall $\Delta t_b$, das größer als das Zeitintervall $\Delta t_a$ ist, wird vom Regler 27 über eine Steuerleitung 28 das Absperrventil 18 geöffnet, d.h. es können aus dem Oxidationsreaktor 14 Gase unter gleichzeitigem Druckabbau im Oxidationsreaktor austreten. Der Regler 27 ist dabei so aufgebaut, daß das Absperrventil 18 nur dann geöffnet wird, wenn innerhalb des Zeitintervalls $\Delta t_b$ der untere Schaltpunkt $P_1$ des Druckmeßgerätes 16 nicht erreicht worden sein sollte. Nur in diesem Fall öffnet das Absperrventil 18. Ist aber im Zeitintervall $\Delta t_a$ der Druck bereits auf $P_1$ abgefallen, wird das Absperrventil 18 nicht geöffnet. Der Regler überprüft somit nach dem Zeitintervall $\Delta t_b$, ob in dem kürzeren, d.h. bereits abgelaufenen Zeitintervall $\Delta t_a$ der untere Regelpunkt $P_1$ erreicht worden ist oder nicht.

Der Regelungskurve mit oszillierenden Druckschwankungen ist im Falle eines zuvor bereits erwähnten Ansammelns von Inertgasen im Reaktor eine gleichmäßige Reduzierung des für das einströmende Gas vorhandene Reaktionsvolumens überlagert. Dies kann zur Konsequenz haben, daß die Zeitintervalle $\Delta t_2$ verkürzt und die Zeitintervalle $\Delta t_b$ verlängert werden. Weiterhin führt das kleinere befüllbare Volumen ebenfalls dazu, daß sich die Intervalle $\Delta t_2$ verkürzen. Dadurch kann es zu Verschiebungen der Gaszusammensetzungen im Reaktor kommen, da der Wasserstoffzufluß im Intervall $\Delta t_a$ konstant bleibt. Im ungünstigsten Falle fällt der Druck nach Erreichen von $P_2$ nicht mehr auf $P_1$ zurück, so daß wiederum über das Absperrventil 18 ein Druckabbau im Oxidationsreaktor auf den unteren Schaltpunkt $P_1$ erreichbar ist.

Die Regelung des Absperrventils 18 kann, wie zuvor beschrieben, nach festgelegten Intervallen erfolgen.

In einem weiteren Ausführungsbeispiel ist das Absperrventil 18 über den Regler 27 nur dann öffenbar, wenn die Absperrventile 9 bzw. 10 für die Sauerstoff- bzw. Wasserstoffzufuhr geschlossen sind. Dadurch ist ausgeschlossen, daß gleichzeitig Gase über die Leitung 13 in den Reaktor einströmen und über das Ventil 18 ausströmen.

Anstatt einer reinen Zeitsteuerung kann auch eine mengenproportionale Steuerung eingesetzt werden. Dazu können die durchgesetzten Gasmengen, die Reaktionsproduktmengen oder die produzierte Wärmemenge als Regelgröße herangezogen werden. Die Gasmengen können dabei über Gaszähler in den Zuleitungssystemen 5 bzw. 6 gemessen werden; die Reaktionsprodukte über Gassensoren im Oxidationsreaktor 14 oder, wenn kondensierbare Reaktionsprodukte entstehen, wie dies beispielsweise bei der Verbrennung von Wasserstoff in Sauerstoff in Form von Wasser der Fall ist, über Füllstandsmengen. Dabei kann die Füllstandsmenge, wenn im Reaktor unter 100°C gefahren werden, direkt gemessen werden, oder bei Fahren über 100°C eine gewisse Produktmenge abgezogen und das Reaktionswasser auskondensiert werden. Zur Messung von Wärmemengen können die handelsüblichen Wärmemeßgeräte eingesetzt werden.

Bei Betrieb mit schwankenden Gasqualitäten ist es vorteilhaft, das Absperrventil 18 direkt über die Messung bestimmter betriebsstoffspezifischer Betriebsparameter zu steuern.

Sammeln sich im Oxidationsreaktor 14 Inertgasmengen an, so ist es wünschenswert, um eine große Abfuhr dieser Mengen zu erreichen, beim Öffnen des Absperrventils 18 eine Druckabsenkung auf Werte unter den Regelwert $P_1$ zu erhalten, um mehr Kapazität zur Sammlung von Inertgasen und Reaktionsprodukten zu haben. Eine dazu notwendige, zeitlich verzögerte Abschaltung des Absperrventils 18 kann einfach dadurch erreicht werden, daß das Druckmeßgerät 16 von der Leitung 13 zum Oxidationsreaktor über eine querschnittsgeringe Leitung 15 verbunden ist. Der dadurch erzeugte Hystereseeffekt führt dazu, daß der tatsächliche Druck im Oxidationsreaktor 14 bereits unterhalb des Regeldrucks $P_1$ abgesunken ist, wenn dieser im Druckmeßgerät 16 registriert wird und dieses das Absperrventil 18 zum Schließen veranlaßt.

Die zuvor beschriebenen Ausführungsbeispiele haben die Verbrennung von Wasserstoff in Sauerstoff beschrieben. Das erfindungsgemäße Verfahren zur druckgesteuerten katalytischen Verbrennung kann selbstverständlich auch bei der Verbrennung anderer Gasgemische, beispielsweise Verbrennung von Methan, Propan od. dgl. eingesetzt werden.

**Patentansprüche**

1. Verfahren zur druckgesteuerten katalytischen Verbrennung von brennbaren Gasen mit im wesentlichen zwei Reaktionspartnern, bei denen es sich um ein Oxidationsmittel und um ein brennbares Gas handelt, in einem Oxidationsreaktor mit
   a) einem Füllschritt, in dem der Oxidationsreaktor mit einem vorbestimmten Gemisch des ersten und des zweiten Reaktionspartners bis zu einem vorbestimmten Anfangsdruck $P_0$ gefüllt wird,
   b) einem ersten Zuführschritt, in dem der erste Reaktionspartner während einer solchen Zeitdauer $\Delta t2$ in den Oxidationsreaktor geleitet wird, bis daß im Reaktor der Anfangsdruck $P_0$ oder ein Ausgangsdruck $P_1$ auf einen vorgegebenen Überdruck $P_2$ angestiegen ist, und
   c) einem zweiten Zuführschritt, in dem nur der zweite Reaktionspartner in den Oxidationsreaktor geleitet wird,
   **dadurch gekennzeichnet,** daß während des Zuführens des ersten Reaktionspartners während des ersten Zuführschrittes b) der zweite Reaktionspartner weiter in den Oxidationsreaktor geleitet wird, wobei der erste Reaktionspartner im Verhältnis zum zweiten Reaktionspartner im stöchiometrischen Überschuß zugeführt wird, daß der zweite Zuführschritt eine Zeitdauer $\Delta t1$ dauert, bis daß der Druck im Oxidationsreaktor auf den Ausgangsdruck $P_1$ gefallen ist, und daß die Zuführschritte abwechselnd direkt aufeinanderfolgend durchgeführt werden.

2. Verfahren nach Anspruch 1, dadurch gekennzeichnet, daß es unter der Bedingung durchgeführt wird, daß der Ausgangsdruck $P_1$ dem Anfangsdruck $P_0$ entspricht.

3. Verfahren nach Anspruch 1 oder Anspruch 2, dadurch gekennzeichnet, daß der erste Reaktionspartner in einem Überschuß von etwa 5 Prozent zugeführt wird.

4. Verfahren nach einem der Ansprüche 1 bis 3, dadurch gekennzeichnet, daß die beiden Reaktionspartner eine Knallgasmischung bilden, wobei der erste Reaktionspartner Sauerstoff, der zweite Reaktionspartner Wasserstoff ist und die Mischung in einem Wasserstoff-Sauerstoff-Verhältnis von 65 : 35 zugeführt wird.

5. Verfahren nach einem der Ansprüche 1 bis 4, dadurch gekennzeichnet, daß die Zeitspanne $\Delta t1$ des zweiten Zuführschrittes so gewählt ist, daß die nachgeführte Menge des unterschüssigen Reaktionspartners zumindest ausreichend ist, die im Reaktor angesammelte Menge des überschüssigen Reaktionspartners umzusetzen.

6. Verfahren nach einem der Ansprüche 1 bis 5, dadurch gekennzeichnet, daß nach Erreichen des Druckes $P_2$ der unterschüssige Reaktionspartner nach einer Zeitspanne $\Delta t_c$, die kleiner als die Zeitspanne $\Delta t1$ des zweiten Zuführschrittes ist, in geringerem oder geringer werdendem Maße während einer Zeitspanne $\Delta t_d$ zugeführt wird, wobei die Zeitspanne $\Delta t_d$ so bemessen ist, daß $\Delta t_1 = \Delta t_c + \Delta t_d$ ist.

7. Verfahren nach einem der Ansprüche 1 bis 5, dadurch gekennzeichnet, daß nach Erreichen des Druckes $P_2$ die Zufuhr des unterschüssigen Reaktionspartners nach einer Zeitspanne $\Delta t_a$, die kleiner als die Zeitspanne $\Delta t1$ des zweiten Zuführschrittes ist, während einer Zeitspanne $t_b$ gesperrt wird, wobei die Zeitspanne $\Delta t_b$ so bemessen ist, daß $\Delta t_1 = \Delta t_a + \Delta t_b$ ist.

8. Verfahren nach einem der Ansprüche 1 bis 7, dadurch gekennzeichnet, daß nach einer gewissen vorbestimmten Anzahl von Steuerzyklen der Reaktorraum für eine Zeitspanne $\Delta t_x$ bis zum Erreichen des Druckes $P_1$ geöffnet wird.

9. Verfahren nach Anspruch 8, dadurch gekennzeichnet, daß nach Ablauf der Zeitspanne $\Delta t_1$ des zweiten Zuführschrittes, falls der Druck $P_1$ noch nicht erreicht ist, der Reaktorraum für die Zeitspanne $\Delta t_x$ bis zum Erreichen des Druckes $P_1$ geöffnet wird.

**10.** Verfahren nach Anspruch 7 und Anspruch 8 und/oder Anspruch 9, dadurch gekennzeichnet, daß der Reaktorraum für das Zeitintervall $\Delta t_b$ geöffnet wird.

**11.** Verfahren nach einem der Ansprüche 7 bis 10, dadurch gekennzeichnet, daß nach Erreichen des Druckes $P_2$ eine Zeituhr gestartet wird, die nach einem Zeitintervall $\Delta t_b$, welches größer als das Zeitintervall $\Delta t_a$ ist, das Öffnen des Oxidationsreaktors bis zum Absinken auf den Druckwert $P_1$ veranlaßt, falls nach der Zeitspanne $\Delta t_b$ der Druck $P_1$ noch nicht erreicht sein sollte.

**12.** Verfahren nach einem der Ansprüche 8 bis 11, dadurch gekennzeichnet, daß die zeitweilige Öffnung des Reaktors zur Atmosphäre oder in einen gesonderten Behälter erfolgt.

**13.** Verfahren nach Anspruch 12, dadurch gekennzeichnet, daß im Reaktor gegebenenfalls anfallenden flüssigen Reaktionsprodukte gleichzeitig mit den gasförmigen Produkten aus dem Reaktor entnommen werden.

**14.** Verfahren nach einem der Ansprüche 1 bis 13, dadurch gekennzeichnet, daß eine zeit-/druckgesteuerte Vorrichtung zur Steuerung der Verfahrensschritte eingesetzt wird.

**15.** Verfahren nach einem der Ansprüche 1 bis 14, dadurch gekennzeichnet, daß eine druck-/mengenproportional gesteuerte Vorrichtung zur Steuerung der Verfahrensschritte eingesetzt wird, deren Mengenrichtgröße die eingesetzte Gasmenge und/oder die Reaktionsproduktmenge und/oder die erzeugte Wärmemenge ist.

**Claims**

**1.** A process for the pressure-controlled catalytic combustion of combustible gases with essentially two reactants which are an oxidation agent and a combustible gas in an oxidation reactor with:

a) a filling step in which the oxidation reactor is filled with a predetermined mixture of the first and second reactants until a predetermined initial pressure $P_0$ is reached,

b) a first feed step in which the first reactant is introduced into the oxidation reactor during such a period $\Delta t2$ that in the reactor the initial pressure $P_0$ or a starting pressure $P_1$ has risen to a predetermined increased pressure $P_2$, and

c) a second feed step in which only the second reactant is passed into the oxidation reactor,

characterised in that during the feed of the first reactant during the first feed step (b) the second reactant is further passed into the oxidation reactor, the first reactant being fed in stoichiometric excess in relation to the second reactant, that the second feed step lasts for a time $\Delta t1$ until the pressure in the oxidation reactor has fallen to the starting pressure $P_1$, and that the feed steps are alternately performed in direct succession.

**2.** A process according to claim 1 characterised in that it is carried out under the condition that the starting pressure $P_1$ corresponds to the initial pressure $P_0$.

**3.** A process according to claim 1 or claim 2 characterised in that the first reactant is supplied in an excess of about 5 percent.

**4.** A process according to one of claims 1 to 3 characterised in that the two reactants form an explosive hydrogen-oxygen mixture, the first reactant being oxygen and the second reactant being hydrogen and the mixture being supplied in a hydrogen-oxygen ratio of 65:35.

**5.** A process according to one of claims 1 to 4 characterised in that the period of time $\Delta t1$ of the second feed step is so selected that the subsequently supplied amount of the deficient reactant is at least adequate to convert the amount which has accumulated in the reactor of the excess reactant.

**6.** A process according to one of claims 1 to 5 characterised in that, after the pressure $P_2$ has been attained, the deficient reactant, after a period of time $\Delta t_c$ which is less than the period of time $\Delta t_1$ of the second feed step is supplied in a smaller or decreasing amount during a period of time $\Delta t_d$, wherein the period of $\Delta t_d$ is such that $\Delta t_1 = \Delta t_c + \Delta t_d$.

**7.** A process according to one of claims 1 to 5 characterised in that, after the pressure $P_2$ has been attained, the feed of the deficient reactant, after a period of time $\Delta t_a$ which is shorter than the period of time $\Delta t_1$ of the second feed step is blocked during a period of time $\Delta t_b$, wherein the period of time $\Delta t_b$ is such that $\Delta t_1 = \Delta t_a + \Delta t_b$.

**8.** A process according to one of claims 1 to 7 characterised in that after a certain predetermined number of control cycles the reactor chamber is opened for a period of time $\Delta t_x$ until the pressure $P_1$ is attained.

9. A process according to claim 8 characterised in that after expiry of the period of time $\Delta t_1$ of the second feed step, if the pressure $P_1$ has not yet been attained, the reactor chamber is opened for the period of time $\Delta t_x$ until the pressure $P_1$ is attained.

10. A process according to claim 7 and claim 8 and/or claim 9 characterised in that the reactor chamber is opened for the period of time $\Delta t_b$.

11. A process according to one of claims 7 to 10 characterised in that, after the pressure $P_2$ has been attained, a timer is started which causes opening of the oxidation reactor after a period of time $\Delta t_b$ which is greater than the period of time $\Delta t_a$, until the pressure falls to the pressure value $P_1$, if the pressure should still not have attained the pressure $P_1$ after the period of time $\Delta t_b$.

12. A process according to one of claims 8 to 11 characterised in that temporary opening of the reactor is to the atmosphere or into a separate receptacle.

13. A process according to claim 12 characterised in that any liquid reaction products occurring in the reactor are removed from the reactor at the same time as the gaseous products.

14. A process according to one of claims 1 to 13 characterised in that a time-/pressure-controlled device is used for controlling the process steps.

15. A process according to one of claims 1 to 14 characterised in that a pressure-/quantity-proportionally controlled device is used for controlling the process steps, the quantitative control parameter being the amount of gas used and/or the amount of reaction product and/or the amount of heat produced.

**Revendications**

1. Procédé de combustion catalytique de gaz combustibles commandée en pression, mettant essentiellement en oeuvre deux partenaires réactionnels, à savoir un oxydant et un gaz combustible, dans un réacteur d'oxydation, et comportant

a) une étape de remplissage, lors de laquelle le réacteur d'oxydation est rempli d'un mélange prédéterminé du premier et du second partenaire réactionnel jusqu'à l'obtention d'une pression initiale $P_0$ prédéterminée,

b) une première étape d'introduction, lors de laquelle le premier partenaire réactionnel est introduit dans le réacteur d'oxydation pendant une durée $\Delta t2$, jusqu'à ce que la pression initiale P0 ou une pression de départ P1 dans le réacteur ait atteint une surpression prédéterminée P2, et

c) une seconde étape d'introduction, lors de laquelle seul le second partenaire réactionnel est introduit dans le réacteur d'oxydation,

caractérisé en ce que pendant l'introduction du premier partenaire réactionnel, lors de la première étape d'introduction b), le second partenaire réactionnel continue d'être introduit dans le réacteur d'oxydation, le premier partenaire réactionnel étant introduit en excès par rapport au second partenaire réactionnel en termes de stoechiométrie, en ce que la seconde étape d'introduction dure une durée $\Delta t1$, jusqu'à ce que la pression régnant à l'intérieur du réacteur d'oxydation soit retombée à la pression de départ $P_1$, et en ce que les étapes d'introduction se déroulent alternativement directement à la suite l'une de l'autre.

2. Procédé selon la revendication 1, caractérisé en ce qu'il fonctionne sous la condition que la pression de départ $P_1$ corresponde à la pression initiale $P_0$.

3. Procédé selon la revendication 1 ou 2, caractérisé en ce que le premier partenaire réactionnel est introduit en excès d'environ 5 %.

4. Procédé selon l'une des revendications 1 à 3, caractérisé en ce que les deux partenaires réactionnels forment un mélange de gaz explosif, le premier partenaire réactionnel étant l'oxygène, le second partenaire réactionnel étant l'hydrogène et le rapport de mélange oxygène/hydrogène étant de 65:35.

5. Procédé selon l'une des revendications 1 à 4, caractérisé en ce que l'intervalle de temps $\Delta t1$ de la seconde étape d'introduction est choisi de telle sorte que la quantité de partenaire réactionnel en défaut introduite ultérieurement soit au moins suffisante pour transformer le partenaire réactionnel en excès accumulé dans le réacteur.

6. Procédé selon l'une des revendications 1 à 5, caractérisé en ce que, une fois la valeur de

pression $P_2$ atteinte, le partenaire réactionnel en défaut, après un intervalle de temps $\Delta t_c$, inférieur à l'intervalle de temps $\Delta t1$ de la seconde étape d'introduction, est introduit en quantités relativement faibles ou décroissantes pendant un intervalle de temps $\Delta td$, l'intervalle de temps $\Delta td$ étant choisi de telle sorte que $\Delta t1 = \Delta tc + \Delta td$.

7. Procédé selon l'une des revendications 1 à 5 caractérisé en ce que, une fois la valeur de pression $P_2$ atteinte, l'introduction du partenaire réactionnel en défaut est interrompue après un intervalle de temps $\Delta ta$, qui est inférieur à l'intervalle de temps $\Delta t1$ de la seconde étape d'introduction, et pendant un intervalle de temps $\Delta tb$, l'intervalle de temps $\Delta tb$ étant choisi de telle sorte que $\Delta t1 = \Delta ta + \Delta tb$.

8. Procédé selon l'une des revendications 1 à 7, caractérisé en ce que, après un certain nombre prédéterminé de cycles commandés, le volume du réacteur est ouvert pendant un intervalle de temps $\Delta tx$ jusqu'à ce que l'on atteigne la pression $P_1$.

9. Procédé selon la revendication 8, caractérisé en ce que, si la pression $P_1$ n'est toujours pas atteinte après écoulement de l'intervalle de temps $\Delta t1$ de la seconde étape d'introduction, le réacteur est ouvert pendant un intervalle de temps $\Delta tx$ jusqu'à l'obtention de la pression $P_1$.

10. Procédé selon la revendication 7 et la revendication 8 et/ou la revendication 9, caractérisé en ce que le réacteur est ouvert pendant l'intervalle de temps $\Delta tb$.

11. Procédé selon l'une des revendications 7 à 10, caractérisé en ce que, une fois la pression $P_2$ atteinte, une horloge se déclenche, provoquant, après l'intervalle de temps $\Delta tb$ qui est supérieur à l'intervalle de temps $\Delta ta$, l'ouverture du réacteur d'oxydation jusqu'à ce que la pression de ce dernier atteigne la pression $P_1$, au cas où la pression $P_1$ ne serait pas encore atteinte après l'intervalle $\Delta tb$.

12. Procédé selon l'une des revendications 8 à 11, caractérisé en ce que lors de son ouverture temporaire, le réacteur se décharge dans l'air ambiant ou dans un conteneur indépendant.

13. Procédé selon la revendication 12, caractérisé en ce que les produits de réaction liquides éventuellement présents dans le réacteur sont évacués hors du réacteur en même temps que les produits gazeux.

14. Procédé selon l'une des revendications 1 à 13, caractérisé en ce que l'on peut utiliser un dispositif commandé en temps/pression pour commander les étapes du procédé.

15. Procédé selon l'une des revendications 1 à 14, caractérisé en ce que l'on utilise un dispositif commandé en pression/quantités pour commander les étapes du procédé, dont les paramètres de quantité sont la quantité de gaz mise en oeuvre et/ou la quantité de produit de réaction et/ou la quantité de chaleur dégagée.

FIG. 1

FIG. 2

FIG.3